# EUROPEAN PATENT APPLICATION

(11) **EP 1 219 525 A2**
(43) Date of publication of application: **03.07.2002**
(21) Application number: 01204637.1
(22) Date of filing: 03.12.2001
(51) Int. Cl.: B62D 5/04, B62D 6/00

(54) **Redundant steer-by-wire system**

(30) Priority: 29.12.2000 US 752091
(71) Applicant: Delphi Technologies, Inc., Troy, MI 48007 (US)
(72) Inventor: Ewbank, Stephen E., Kokomo, IN 46901 (US); Hennings, Craig A., Washoe Valley, NV 89704 (US); Millsap, Scott A., Saginaw, MI 48603 (US); Deasy, Kevin M., Noblesville, IN 46060 (US)
(74) Representative: Denton, Michael John

(57) **Abstract**

A steer-by-wire system includes a first network (10). The first network (10) networks with a first pair of controllers (14, 16) that drives at least a first pair of motors (42, 54). The steer-by-wire system further includes a second network (12) that is independent of the first network (10). The second network (12) networks with a second pair of controllers (18, 20) that drives the second pair of motors (44, 56) in conjunction with the first network (10). Lastly, the steer-by-wire system includes a third network (24) that networks with the first pair of controllers (14, 16), and the second pair of controllers (18, 20) whereby information is transmitted via the third network (24) independent of the first network (10) and the second network (12).

A method for a steer-by-wire system that includes the usage of a third network (24) if a first network (10) and a second network (12) whose normal function is disrupted. Another method for a steer-by-wire system that includes the usage of a third network (24) if a master controller (22) whose normal function is disrupted.

## Description

### TECHNICAL FIELD

This invention relates to steer-by-wire systems, and more particularly, to steer-by-wire systems with built-in redundancy.

### BACKGROUND OF THE INVENTION

Steer-by-wire systems typically eliminate mechanical connections. Conventional steering systems with hydraulic or electric assist mechanisms are commonly used. Typically, the reliability of the system as a whole, as well as the reliability of subsystems need to be better than for conventional systems. The reason, among others, is failure of one part of the system may have grave consequences in that the steer-by-wire system typically do not have sufficient redundancy. Therefore, redundancy considerations are important both in system level and subsystem level.

### BRIEF SUMMARY OF THE INVENTION

A steer-by-wire system includes a first network. The first network networks with a first pair of controllers that drives at least a first pair of motors. The steer-by-wire system further includes a second network that is independent of the first network. The second network networks with a second pair of controllers that drives the second pair of motors in conjunction with the first network. Lastly, the steer-by-wire system includes a third network that networks with the first pair of controllers, and the second pair of controllers whereby information is transmitted via the third network independent of the first network and the second network.

A method for a steer-by-wire system that includes the usage of a third network if a first network and a second network whose normal function is disrupted. Another method for a steer-by-wire system that includes the usage of a third network if a master controller whose normal function is disrupted.

### BRIEF DESCRIPTION OF THE DRAWINGS

Figures 1 and 2 are schematics for the invention.
Figure 3 is an embodiment of the invention.

### DETAILED DESCRIPTION OF THE INVENTION

A system described here uses four electric motors to drive the two steering gears, two motors per gear. Motion of the left and right gears, which are coupled to tie rods and left/right road wheels, are independently controlled by electronic controllers. In other words, one controller is designated for each motor wiring. Each one of these controllers is called "local" controllers. Two motors drive each gear for redundancy. It can be appreciated that this allows for the possibility of no mechanical link between the left and right sides of the vehicle. Two absolute position sensors and two high-resolution position sensors are used per tie rod.

In addition, the system uses one additional electric motor and controller assembly to generate torque feedback to the driver to simulate "road forces" normally felt at the steering wheel in a conventional steering system equipped vehicle. In other words, a unit with a fifth motor with its concomitant controller independent of the other four motors is described. This unit is called the "steering wheel actuator". Sensors are provided in the tie rods to measure the road forces generated by each respective wheel/steering knuckle assembly.

Furthermore, a "master" controller is used to coordinate the operation of the above described five controllers. The master controller controls the operation of each local controller. In addition, the master controller generates a torque feedback command for the steering wheel actuator to acquire, and displays information to a vehicle operator through status lamps. Also, the master controller communicates to other electronic vehicle controllers, for example, communication with a brake controller in order to bring a vehicle to a stop if the system fails. In yet another example, the master controller may generate automatic steering commands for automatic driving. Lastly, the master controller provides a signal to the local controllers with the signal indicating the health of the master controller.

The above mentioned five controllers communicate with each other via three networks. The three networks use a protocol, such as the Controller Area Network (CAN) protocol. In the preferred embodiment, the three networks are CAN1, CAN2, and a safety backup network. The network transmission media may be optical fiber or copper wires or other suitable transmission media.

In addition, the safety backup network, i.e., a network having a "backup CAN converter" is present. The safety "backup CAN converter" reads steering wheel position sensors, and transmits a sensed information via the safety "backup CAN converter" to the local controllers in order to allow proper steering and vehicle control when normal operation of the system is disrupted. However, the safety "backup CAN converter" may render a reduced performance.

Electrical power is provided by way of two batteries each independently supplying the system. The reason for the two batteries is that failure of one battery is not going to affect the operation of the other battery. In other words, a redundancy in power supply is included in the instant invention.

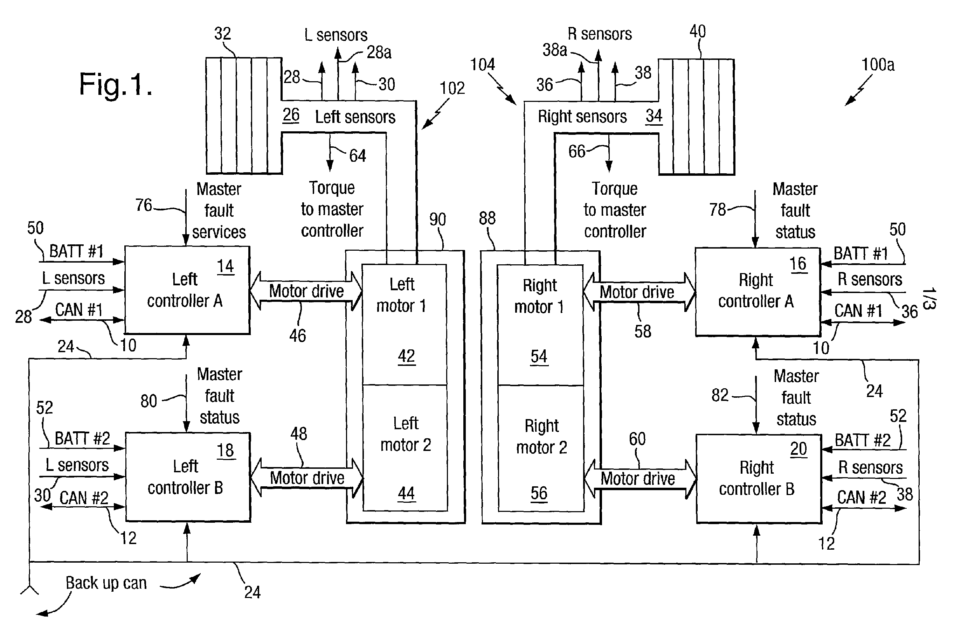

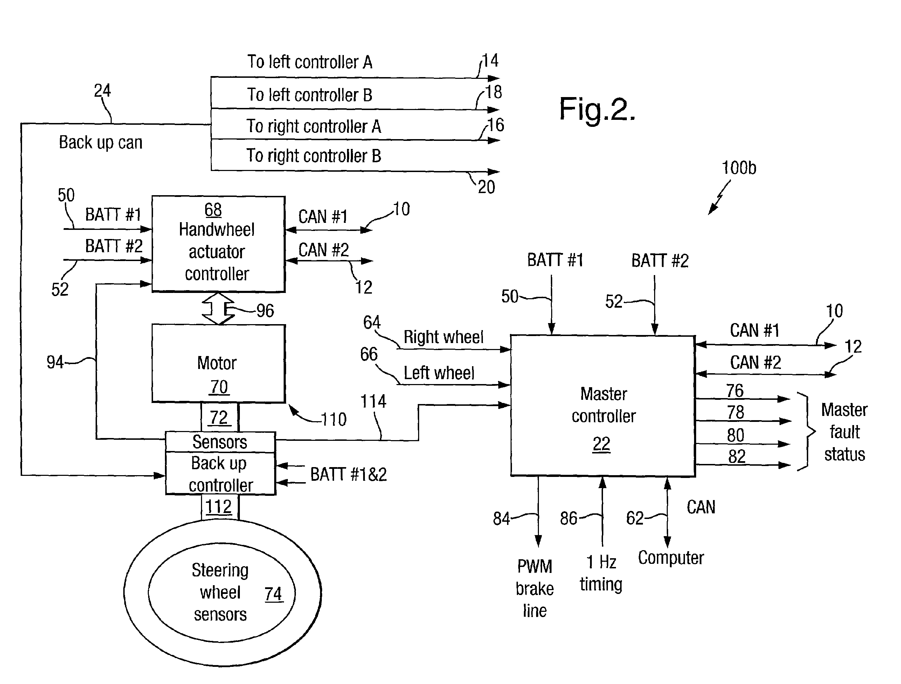

Referring to Figures 1 and 2, a schematic for the instant invention is described. Under normal operating conditions, a CAN1 10 and a CAN2 12 transmit and carry signals to their respective controllers. In other words, a left controller A 14 and a right controller A 16 for the CAN1 10, as well as a left controller B 18 and a right controller B 20 for the CAN2 12. In cases that disable both CAN1 10 and CAN2 12, or if a master controller 22 fails, a third network, a backup CAN 24, will transmit steering wheel position signals to the local controllers 14, 16, 18, and 20 to allow basic steering of the road wheels. If only one CAN fails, the two controllers connected to that CAN drop out, and the vehicle continues to steer using only the remaining two controllers. The motors and controllers will therefore preferably be powerful enough to drive the vehicle with only two of them operational. Note that the backup CAN 24 is a safety feature that operates only in certain situation where backup is needed. A set of left sensors 26 sense a set of signals that include position signals 28 and 30. The position signals 28 and 30 are fed into the left controller A 14 and the left controller B 18 respectively with position signal 28 fed into the left controller A 14 and position signal 30 fed into the left controller B 18. Furthermore, the position signals 28 and 30 sense a rotating member (not shown) that is coupled to a left wheel 32.

Complementarily, a set of right sensors 34 sense a set of signals that include position signals 36 and 38. The position signals 36 and 38 are fed into the right controller A 16 and the right controller B 20 respectively with position signal 36 fed into the right controller A 16 and position signal 38 fed into the right controller B 20. Furthermore, the position signals 36 and 38 sense a rotating member (not shown) that is coupled to a right wheel 40.

The left controller A 14 and left controller B 18 independently drive left motor one, 42 and left motor two, 44 respectively. The drive is accomplished independently via drives 46 and 48 respectively. Two batteries, the first battery 50, and the second battery 52 each independently supply the above independent controllers. In other words, the first battery 50, independent of the second battery 52, supplies left controller A 14. Similarly, the second battery 52, independent of the first battery 50, supplies left controller B 18. The independence is further enhanced by way of having left controller A 14 independently coupled to CAN1 10, whereas left controller B 18, independent of left controller A 14, is coupled to CAN2 12.

Similarly, the right controller A 16 and right controller B 20 independently drive right motor one, 54 and right motor two, 56 respectively. The drive is accomplished independently via drives 58 and 60 respectively. Two batteries, a first battery 50, and a second battery 52 each independently supply the above independent controllers. In other words, the first battery 50, independent of the second battery 52, supplies right controller A 16. Similarly, the second battery 52, independent of the first battery 50, supplies right controller B 20. The independence is further enhanced by way of having right controller A 16 independently coupled to CAN1 10, whereas right controller B 20, independent of right controller A 16, is coupled to CAN2 12.

The master controller 22 is coupled to CAN1 10, CAN2 12, as well as being supplied by the first battery 50, and the second battery 52. Additionally, the master controller 22 is coupled to a central processing unit (CPU) via a data bus 62. Furthermore, the set of left sensors 26 senses a first force or torque signal 64 that is derived from the left wheel 32. The first force or torque signal 64 are fed into the master controller 22. Similarly, the set of right sensors 34 senses a second force or torque signal 66 that is derived from the right wheel 40. The second force or torque signal 66 are fed into the master controller 22.

Under normal operation conditions, a steering wheel actuator 68 that is coupled to a steering wheel communicates through CAN1 10, and CAN2 12. In addition, the steering wheel actuator 68 is powered by the first battery 50 and the second battery 52. The steering wheel actuator 68 is also coupled to a motor, which in turn is coupled to a second set of sensors 72.

Under abnormal operating conditions, which include failure of CAN1 10, and CAN2 12, as well as failure of the master controller 22. Firstly, we will discuss failure of CAN1 10, and CAN2 12. As can be appreciated, the failure of CAN1 10, and CAN2 12 necessarily disrupts communication within the networks of CAN1 10, and CAN2 12 respectively. In other words, the communications via CAN1 10 with left controller A 14 and right controller A 16 is disrupted. Similarly, the communications via CAN2 12 with left controller B 18 and right controller B 20 is disrupted. However, the left controller A 14 and right controller A 16, as well as left controller B 18 and right controller B 20 need to be suitably in operation somehow. The backup CAN 24 performed some of the requisite operations. In other words, the backup CAN 24 couples the left controller A 14 and the right controller A 16, as well as left controller B 18 and right controller B 20 with the set of sensors 72. The set of sensors 72 in turn is coupled to the steering wheel actuator controller 68. A set of steering wheel sensors (not shown) sensing information from the steering wheel 74 is coupled to the backup CAN 24, thereby the sensed information form the steering wheel 74 can be communicated to the left controller A 14 and the right controller A 16, as well as the left controller B 18 and the right controller B 20 with the set of sensors 72. Furthermore, the backup CAN 24 is supplied by the first battery 50 and the second battery 52.

Secondly, lets discuss the abnormal condition of a failure of the master controller 22. The master controller 22 further has a set of master fault status lines 76, 78, 80, 82 that communicate with the left controller A 14 and the right controller A 16, as well as the left controller B 18 and the right controller B 20. When the master controller 22 is functioning abnormally, the set of master fault status lines 76, 78, 80, 82 communicate with the left controller A 14 and the right controller A 16, as well as the left controller B 18 and the right controller B 20 thereby causing the left controller A 14 and the right controller A 16, as well as the left controller B 18 and the right controller B 20 to use data
from the backup CAN 24. The controllers are preferably always communicating with the backup CAN, not just during faults, so there is no increase in bus traffic during faults. This keeps the communications predictable under fault conditions.

The master controller 22 has pulse width modulation (PWM) brake link 84 that can generate a command to cause the vehicle to stop. The master controller 22 further has a one Hertz (Hz) timing input command, which functions as a set point command for the master controller 22.

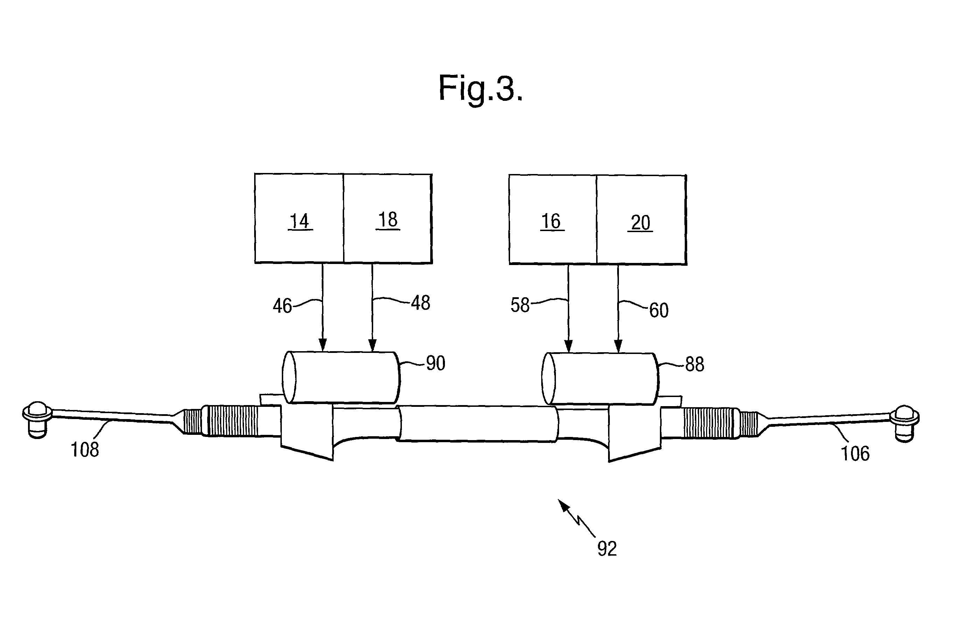

Referring to Figure 3, one embodiment among others for the instant invention is depicted. A right motor mechanism 88 having its driving mechanism coupled to a driving system 89. For example, a rotor (not shown) of the right motor may link with an adjustable rotating member such as a tie rod. The right controller A 16 and the right controller B 20, via their respective motor drives 58 60, activate the motor mechanism 88. Upon inspection of Figure 3, it will be seen that only one motor casing is on the right side. However, the inner wiring can contain two independent sets of stator wiring. Complementarily, a left motor mechanism 90 having its driving mechanism coupled to a driving system 89. For example, a rotor (not shown) of the left motor may link with an adjustable rotating member such as a tie rod. The left controller A 14 and the left controller B 28, via their respective motor drives 46 48, activate the motor mechanism 90. Upon inspection of Figure 3, it will be seen that only one motor casing is on the left side. However, the inner wiring can contain two independent sets of stator wiring.

The instant invention may embody only one casing for both the right side and the left side with a set of four or more wiring that are independent of each other. In other words, the wiring independently controlled by their respective controllers. For example, by the controllers such as the left controller A 14 and the right controller A 16, as well as the left controller B 18 and the right controller B 20, etc.

Other by-wire systems, commonly known as X-by-wire systems may be included in the purview of the instant invention. For example, some brake-by-wire systems may suitably implement the apparatus and methods of the instant invention. X-by-wire system is unique in that no mechanical links exists between, for example, a vehicle operator holding the steering wheel and the force of torque exerted upon a pair of front wheels of a vehicle. The uniqueness demands that the system be fail-safe. In other words, for system such as electric power steering or assisting system, an electric machine such as a motor, a mechanical link still exists. The motor is merely assisting the mechanical link in that if a failure of the motor occurs, the system may still function by relying upon the mechanical link.

We have described a steer-by-wire system that includes a first network. The first network networks with a first pair of controllers that drives at least a first pair of motors. The steer-by-wire system further includes a second network that is independent of the first network. The second network networks with a second pair of controllers that drives the first pair of motors in conjunction with the first network. Lastly, the steer-by-wire system includes a third network that networks with the first pair of controllers, and the second pair of controllers whereby information is transmitted via the third network independent of the first network and the second network.

We have also described a method for a steer-by-wire system that includes the usage of a third network if a first network and a second network whose normal function is disrupted. Further, the third network could be used if a master controller's normal function is disrupted.

A person skilled in the art may make modifications to the preferred embodiment shown herein within the scope and intent of the claims. While the present invention has been described as carried out in a specific embodiment thereof, it is not intended to be limited thereby but intended to cover the invention broadly within the scope and spirit of the claims.

## Claims

1. A steer-by-wire system comprising:
a first network (10) networking a first pair of controllers (14, 16) for driving at least a first pair of motors (42, 54);
a second network (12) independent of said first network (10), networking a second pair of controllers (18, 20) for driving a second pair of motors (44, 56) in conjunction with said first network (10); and
a third network (24) networking with said first pair of controllers (14, 16), and said second pair of controllers (18, 20) whereby information is transmitted via said third network (24) independent of said first network (10) and said second network (12).

2. The steer-by-wire system of claim 1 further comprising:
a master controller (22) coupled to said first network (10) and said second network (12).

3. The steer-by-wire system of claim 1, wherein:
said first network (10) and said second network (12), as well as said third network (24) use Controller Area Network (CAN) protocol.

4. The steer-by-wire system of claim 1, wherein:
said first pair of controllers (14, 16) and said second pair of controllers (18, 20) independently controls a first pair of motor drivers driving a pair of electric machine wiring, and a second pair of motor drivers driving a pair of electric machine wiring.

5. The steer-by-wire system of claim 2 further comprising:
a first set of sensors (26) sensing information from a first set of rolling members (32), said information is transmitted to said first pair of controllers (14, 16) and said second pair of controllers (18, 20), as well as transmitted to said master controller (22).

6. The steer-by-wire system of claim 5, wherein:
said information comprises,
position information of said first set of rolling members (32); and
force information of said first set of rolling members (32).

7. The steer-by-wire system of claim 1 further comprising:
a second set of sensors (34) coupled to said third network (24) for sensing information from a second rolling member (40).

8. The steer-by-wire system of claim 7, wherein said information comprises,
position information of said second rolling member (40).

9. A method for a steer-by-wire system, comprising:
if a first network (10) and a second network (12) whose normal function is disrupted, using a third network (24).

10. A method for a steer-by-wire system, comprising:
if a master controller (22) whose normal function is disrupted, using a third network (24).
